# EUROPEAN PATENT SPECIFICATION

(11) **EP 1 341 596 B1**
(45) Date of publication and mention of the grant of the patent: **07.07.2010**
(21) Application number: 01973847.5
(22) Date of filing: 05.10.2001
(51) Int. Cl.: B01D 57/02, G01N 27/447, B01D 61/42

(54) **MULTI-PORT ELECTROPHORESIS SEPARATION APPARATUS AND CORRESPONDING METHOD**
MULTI-PORT-ELEKTROPHORESE-TRENNVORRICHTUNG UND ENTSPRECHENDES VERFAHREN
APPAREIL MULTI-VOIES DE SÉPARATION PAR ÉLECTROPHORÉSE ET PROCÉDÉ CORRESPONDANT

(30) Priority: 06.10.2000 AU PR059200; 05.12.2000 AU PR189500
(43) Date of publication of application: 10.09.2003
(73) Proprietor: Arturus Capital Limited, Sydney, NSW 2000 (AU); THE TEXAS A & M UNIVERSITY SYSTEM, College Station, TX 77843-3369 (US)
(72) Inventor: OGLE, David, Cowan, NSW 2081 (AU); VIGH, Gyula, College Station, TX 77842 (US); RYLATT, Dennis, Brian, Ryde, NSW 2112 (AU)
(74) Representative: Jump, Timothy John Simon
(86) International application number: PCT/AU2001/001256
(87) International publication number: WO 2002/028516

(56) References cited:
- WO-A-00/13776
- WO-A-94/11728
- FR-A- 1 223 635
- GB-A- 2 118 975
- US-A- 3 989 613
- US-A- 5 087 338
- US-A- 5 906 724

## Description

### Technical Field

This invention relates to an apparatus for separation of compounds in solution by electrophoresis, a separation unit and cartridge suitable for the apparatus, and methods of use of the apparatus.

### Background of the Invention

Preparative scale electrophoretic separations are becoming important for the processing of both simple and complex samples. A key element determining the success of such separation is the extent to which convective re-mixing of the separated components can be prevented. Multicompartment electrolyzers are considered attractive for preparative-scale electrophoretic separations because separated components of a sample can be readily isolated in space and/or time. Many of the multicompartment electrolyzers suffer from the improper integration of the electrophoretic and hydraulic transport trajectories. Recently, the Gradiflow™ technology (US 5039386, Gradipore Limited) was introduced to favorably implement the integration of the electrophoretic and hydraulic processes involved in the preparative-scale electrophoretic separation of components. Despite its favorable characteristics, the Gradiflow™ technology was limited in the sense that it implemented two separation chambers isolated from each other and the electrode compartments by electrophoresis separation membranes that essentially prevented convective mixing of the contents of adjacent chambers. This design limited the Gradiflow™ technology to binary separations, albeit by sequential binary separations, individual components could also be separated from complex mixtures.

The present inventors have now developed a multichamber electrolyzer which extends the application field of separation technology from binary separations to the simultaneous separation of multiple components from complex mixtures.

### Disclosure of Invention

In a first aspect, the present invention provides a multi-port electrophoresis apparatus for separating compounds in solution comprising:
(a) a cathode chamber containing a cathode;
(b) an anode chamber containing an anode, wherein the anode chamber is disposed relative to the cathode chamber so that the cathode and anode are able to generate an electric field in an electric field area upon application of a selected electric potential between the cathode and anode;
(c) inlet and outlet means for communicating liquid into and out of the cathode chamber defining a catholyte flow path;
(d) inlet and outlet means for communicating liquid into and out of the anode chamber defining an anolyte flow path;
(e) at least one electrolyte reservoir in fluid communication with the cathode chamber and the anode chamber; and means for communicating an electrolyte between the at least one electrolyte reservoir and the cathode and anode chambers; or
   two electrolyte reservoirs, the first in fluid communication with the cathode chamber and the second in fluid communication with the anode chamber; a first means for communicating an electrolyte between the first electrolyte reservoir and the cathode chamber, and a second means for communicating an electrolyte between the second electrolyte reservoir and the anode chamber;
(f) twelve adjacently disposed separation chambers between the cathode and anode chambers so as to be at least partially disposed in the electric field area, the separation chambers being formed by a plurality of ion-permeable membranes positioned between the anode and cathode chambers, all the ion-permeable membranes being polyacrylamide membranes with different nominal molecular mass cut-offs (NMM) and being able to impede convective mixing of contents of adjacent chambers;
(g) inlet and outlet means for communicating liquid into and out of the separation chambers defining separation flow paths; and
(h) at least one sample reservoir, wherein each at least one sample reservoir is in fluid communication with a separation chamber.

Preferably, the apparatus comprises two electrolyte reservoirs, a catholyte reservoir in fluid communication with the cathode chamber and an anolyte reservoir in fluid communication with the anode chamber.

The apparatus can have twelve or more separation chambers. The apparatus can have any number of sample reservoirs, preferably three, four, five, six, seven, eight, nine, ten, eleven, twelve or more. There can be one sample reservoir for each separation chamber or a sample reservoir can be in fluid communication with more than one separation chamber.

In one preferred form, the apparatus comprises twelve separation chambers and twelve corresponding sample reservoirs in fluid communication with a respective separation chamber.

Preferably, at least some of the membranes restrict convective mixing of contents of adjacent chambers and prevent substantial movement of components in the absence of an electric field.

In one preferred form, the membranes have characteristic average pore sizes and pore size distributions.

In another preferred form, at least one of the membranes is an isoelectric membrane having a characteristic pI value.

In another preferred form, at least one of the membranes is an ion-exchange membrane capable of mediating selective movement of ions.

It will be appreciated that the apparatus can have the same type of ion-permeable membrane or a combination of two or more types, depending on the desired separation or treatment of a given sample.

Preferably, the cathode and anode electrodes comprise titanium mesh coated with platinum.

In one preferred form, a separation chamber contains inlet and outlet means that are in fluid communication with that chamber.

In another preferred form, at least two separation chambers are in fluid communication via the same inlet and outlet means.

In another preferred form, at least one separation chamber is in fluid communication with at least one other separation chamber via an external fluid communication means.

In another preferred form, at least two of the separation chambers are in serial fluid communication.

In another preferred form, at least two of the separation chambers are in parallel fluid communication.

The apparatus may further comprise:
means adapted for circulating electrolyte from the at least one electrolyte reservoir through the cathode chamber and the anode chamber forming electrolyte streams in the respective chambers; and
means adapted for circulating fluid content from the sample reservoirs through the respective separation chambers forming separation streams in the respective separation chambers.

Preferably, the means adapted for communicating the electrolyte and fluid content comprise pumping means which are separately controlled for independent movement of the respective electrolyte and fluid.

The apparatus may further comprise means adapted for removing contents from and replacing contents in at least one of the sample reservoirs.

The apparatus may further comprise means adapted to maintain temperature of contents in at least one of the cathode chamber, the anode chamber, a sample reservoir, or a separation chamber. In one form, the temperature of electrolyte in the cathode and anode chambers and/or fluid in the at least one of the separation chambers is maintained. Preferably, the means to maintain the temperature is a tube-in-shell heat exchanger.

In a preferred form of the apparatus, the cathode chamber, the anode chamber and the separation chambers are contained in a separation unit wherein the separation unit is selected from the group consisting of a cartridge and a cassette and the separation unit is fluidly connected to the electrolyte reservoir and the sample reservoirs.

Also described herein is an electrophoresis separation unit, the unit comprising:-
(a) a cathode chamber containing a cathode;
(b) an anode chamber containing an anode, wherein the anode chamber is disposed relative to the cathode chamber so that the cathode and anode are adapted to generate an electric field in an electric field area upon application of a selected electric potential between the cathode and anode;
(c) an inlet and outlet means for communicating liquid into and out of the cathode chamber defining a catholyte flow path;
(d) an inlet and outlet means for communicating liquid into and out of the anode chamber defining an anolyte flow path;
(e) at least three adjacently disposed separation chambers disposed between the cathode and anode chambers so as to be at least partially disposed in the electric field area, the separation chambers being formed by a plurality of ion-permeable barriers positioned between the anode and cathode chambers, the ion-permeable barriers adapted to impede convective mixing of contents of adjacent chambers; and
(f) inlet and outlet means for communicating liquid into and out of the separation chambers defining separation flow paths;
wherein application of the selected electric potential causes migration of at least one component through at least one of the ion-permeable barriers.

Preferably, the unit comprises between three and twelve separation chambers. The unit can have any number of separation chambers, preferably three, four, five, six, seven, eight, nine, ten, eleven, twelve or more.

In one preferred form, the unit comprises four separation chambers. In another preferred form, the unit comprises six separation chambers. In a yet further preferred form, the unit comprises twelve separation chambers. It will be appreciated, however, that any number of separation chambers can be incorporated into the unit.

Preferably, at least some of the barriers restrict convective mixing of contents of adjacent chambers and prevent substantial movement of components in the absence of an electric field.

Preferably, the barriers are membranes having characteristic average pore sizes and pore size distributions.

In one preferred form, at least one of the barriers is an isoelectric membrane having a characteristic pI value.

In another preferred form, at least one of the barriers is an ion-exchange membrane capable of mediating selective movement of ions.

In another preferred form, the cathode and anode electrodes comprise titanium mesh coated with platinum.

It will be appreciated that the unit can have the same type of ion-permeable barrier or a combination of two or more types, depending on the desired separation or treatment of a given sample.

In one form, the unit comprises a cathodic connection block and an anodic connection block which define a plurality of inlet and outlet means for communicating liquid into and out of the separation chambers.

In this form, the cathodic and anodic connection blocks preferably house the cathode and anode and connection means for connecting the cathode and anode to a power supply.

In one form, the cathode is housed in a recess or channel defined in the cathodic connection block and the anode is housed in a recess or channel defined in the anodic connection block. The anodic and cathodic connection blocks also preferably define inlets and outlets for the catholyte and anolyte flow.

In one preferred form, at least one separation chamber is in fluid communication with at least one other separation chamber via an external communication means.

In another preferred form, at least two separation chambers are in serial fluid communication.

In another preferred form, at least two separation chambers are in parallel fluid communication.

In another preferred form, at least two separation chambers are in fluid communication via the same inlet and outlet means.

In a preferred form, the separation chambers are formed or housed in a cartridge which is adapted to be removable from the unit.

Also described herein is a cartridge for use in an electrophoresis unit, the cartridge comprising:
(a) a housing containing at least two inner ion-permeable barriers positioned between a first outer ion-permeable barrier and a second outer ion-permeable barrier, the barriers defining three or more separation chambers therebetween, the barriers adapted to impede convective mixing of contents in adjacent chambers; and
(b) inlet and outlet ports for communicating liquid into and out of the chambers defining flow paths in the separation chambers; wherein upon communication of liquid to the inlet ports, liquid is caused to stream through the chambers without substantial convective mixing of liquid between the chambers.

Preferably, the cartridge further includes external gaskets positioned on outer ion-permeable barriers.

Preferably, the flow paths are defined by the barriers.

Preferably, the cartridge further comprises grid elements positioned adjacent the barriers. In a preferred form, the grid elements are generally planar.

The grid element may further including a support arrangement for supporting the barriers and for mixing fluid in the flow paths. Preferably, the support arrangement is a lattice arrangement.

In one preferred form, the cartridge comprises two or more inner barriers defining three or more separation chambers. Preferably, the cartridge comprises between three and twelve separation chambers. The cartridge can have any number of separation chambers, preferably three, four, five, six, seven, eight, nine, ten, eleven, twelve or more.

Preferably, at least some of the barriers restrict convective mixing of contents of adjacent chambers and prevent substantial movement of components in the absence of an electric field.

The barriers are preferably membranes having characteristic average pore sizes and pore size distributions.

At least one of the barriers may be an isoelectric membrane having a characteristic pl value.

At least one of the barriers may be an ion-exchange membrane capable of mediating selective movement of ions.

It will be appreciated that the cartridge can have the same type of ion-permeable barrier or a combination of two or more types, depending on the desired separation or treatment of a given sample.

In one preferred form, the cartridge contains inlet and outlet ports that are in fluid communication with that chamber.

In one preferred form, at least two separation chambers are in fluid communication via the same inlet and outlet ports.

In a second aspect, the present invention provides a method for altering the composition of a sample by electrophoresis, the method comprising the steps of:
(a) providing a sample to a multi-port electrophoresis apparatus according to the first aspect of the invention;
(b) communicating electrolyte to the anode and cathode chambers via the anode and cathode inlet means;
(c) communicating the sample to at least one of the separation chambers via the inlet means;
(d) communicating fluid to the other chambers via the inlet means; and
(e) applying an electric potential between the cathode and anode causing at least one component from the sample in a chamber to move through a membrane into one or more adjacent separation chambers.

The method may further include the step:-
collecting the sample with an altered composition.

Preferably, electrolyte communicated to the anode and cathode chambers is circulated through the respective inlet means and outlet means forming electrolyte streams.

Preferably, sample and fluid communicated to the separation chambers are circulated through the inlet means and outlet means of the respective chambers forming sample and fluid streams.

Preferably, substantially all trans-barrier movement of components is initated by the application of the electric potential.

Preferably, at least some of the membranes restrict convective mixing of contents of adjacent chambers and prevent substantial movement of components in the absence of an electric field.

Preferably, the membranes have characteristic average pore sizes and pore size distributions. At least one of the membranes may be an isoelectric membrane having a characteristic pI value. At least one of the membranes may be an ion-exchange membrane capable of mediating selective movement of ions.

It will be appreciated that the same type of ion-permeable membrane or a combination of two or more types, depending on the desired separation or treatment of a given sample can be used.

Flow rates of the electrolytes through the electrode chambers and separation chambers can have an influence on the separation of compounds. Rates of nanolitres per minute up to litres per minute can be used depending on the configuration of the apparatus and the sample to be separated. In some cases, stagnant liquid will suffice.

Voltage and/or current applied can vary depending on the separation.

Typically, up to about 5000 volts can used, but the choice of voltage will depend on the configuration of the apparatus, the electrolytes and the sample to be separated.

The present invention relates to use of the apparatus according to the first aspect of the present invention in the separation of one or more compounds or components from a sample.

The present invention relates to use of the method according to the second aspect of the present invention in the separation of one or more compounds or components from a sample.

The present invention relates to a compound separated by the apparatus according to the first aspect of the present invention.

The present invention relates to a compound separated by the method according to the second aspect of the present invention.

Gradiflow™ is a trade mark of Gradipore Limited, Australia.

An advantage of the present invention is that the apparatus and method can effectively and efficiently process and separate charged molecules and other components in samples.

Another advantage of the present invention is that the apparatus and method have scale-up capabilities, increased separation speed, lower cost of operation, lower power requirements, and greater ease of use.

Yet another advantage of the present invention is that the apparatus and method have improved yields of the separated component, and improved purity of the separated component.

Yet another advantage of the present invention is that the apparatus and method allows the treatment or processing of multiple samples simultaneously.

These and other advantages will be apparent to one skilled in the art upon reading and understanding the specification.

Throughout this specification, unless the context requires otherwise, the word "comprise", or variations such as "comprises" or "comprising", will be understood to imply the inclusion of a stated element, integer or step, or group of elements, integers or steps, but not the exclusion of any other element, integer or step, or group of elements, integers or steps.

In order that the present invention may be more clearly understood, preferred forms will be described with reference to the following examples and drawings.

### Brief Description of Drawings

Figure 1 is a schematic diagram of an electrophoresis separation unit having four separation chambers.
Figure 2 is a schematic diagram of an electrophoresis separation unit having six separation chambers.
Figure 3 is a schematic diagram of an alternative embodiment of an electrophoresis separation unit having six separation chambers.
Figure 4 is a schematic diagram of an electrophoresis separation unit having twelve separation chambers for use in the electrophoresis apparatus of the present invention.
Figure 5A is an exploded view of an electrophoresis separation unit capable of having twelve separation chambers for use in the electrophoresis apparatus of the present invention.
Figure 5B is a view of an electrophoresis separation unit according to Figure 5A partially assembled in a suitable housing.
Figure 5C is a view of an electrophoresis separation unit according to Figure 5A fully assembled in a suitable housing.
Figure 6A is a plan view of a first grid element which can be incorporated as a component of an electrophoresis separation unit or cartridge.
Figure 6B is a plan view of a second grid element which can be incorporated as a component of an electrophoresis separation unit or cartridge.
Figure 6C is a plan view of a third grid element which can be incorporated as a component of an electrophoresis separation unit or cartridge.
Figure 7 is an exploded view of the inner components of an electrophoresis separation unit or cartridge having three separation chambers.
Figure 8 is an exploded view of the inner components of an electrophoresis separation unit or cartridge having four separation chambers.
Figure 9 is an exploded view of the inner components of an electrophoresis separation unit or cartridge having six separation chambers.
Figure 10 is an exploded view of the inner components of an electrophoresis separation unit or cartridge having twelve separation chambers.
Figure 11 is a schematic representation of an electrophoresis apparatus utilizing a separation unit of Figure 1.
Figure 12 is a line diagram of an electrophoresis apparatus utilizing a separation unit having twelve separation chambers.
Figure 13 analytical SDS-PAGE results for samples harvested after 60, 120, and 180 minutes of electrophoresis during the separation of IgG from human plasma. Lane 1: feed sample. Lanes 2, 3, 4: analytical results after 60 min of electrophoresis, Lanes 5, 6, 7: analytical results after 120 min of electrophoresis, Lanes 8, 9, 10: analytical results after 180 min of electrophoresis. Transfer of IgG from the sample stream to the product stream was evident at the first analysis point at 60 mins.
Figure 14 shows analytical SDS-PAGE results for the samples harvested after 4 hours of electrophoresis. Lanes 1 and 2: separation chambers 12 and 11. Lanes 3 to 10: separation chambers 10 to 3.
Figure 15 shows the image of an SDS-PAGE separation of the contents of the separation chambers after 4 hours of electrolysis. Lysozyme from egg white (molecular mass 14k Da, isoelectric point of 10) moved into separation chambers 11 and 12 (between the 3 kDa-15 kDa and 15 kDa-1000 kDa membranes), because this protein is positively charged at pH 8.5 (Lanes 1 and 2). Negatively charged proteins moved toward the anode (Lanes 3-10): the smaller the size of the protein, the farther away it moved from chamber 10 which was the feed point for the sample.
Figure 16 shows the image of an SDS-PAGE separation of the contents of the separation chambers after 4 hours of electrolysis in Example 4. Lanes 1, 3, 5, 7 and 9: analytical results for the product streams after 60 min of electrophoresis, Lanes 2, 4, 6, 8 and 10: analytical results for the lower pI components left over after 60 min of electrophoresis.
Figure 17 shows the image of a Western blot of the same separation as Figure 16, with an antibody against AAT.

### Modes for Carrying Out the Invention

Before describing the preferred embodiments in detail, the principal of operation of the apparatus will first be described. An electric field or potential applied to ions in solution will cause the ions to move toward one of the electrodes. If the ion has a positive charge, it will move toward the negative electrode (cathode). Conversely, a negatively-charged ion will move toward the positive electrode (anode).

In the apparatus of the present invention, ion-permeable membranes that substantially prevent convective mixing between the adjacent chambers of the apparatus or unit are placed in an electric field and components of the sample are selectively transported through the membranes. The particular ion-permeable membranes used will vary for different applications and generally have characteristic average pore sizes and pore size distributions, isoelectric points or other physical characteristics allowing or substantially preventing passage of different components.

Having outlined some of the principles of operation of an apparatus in accordance with the present invention, an apparatus will be described.

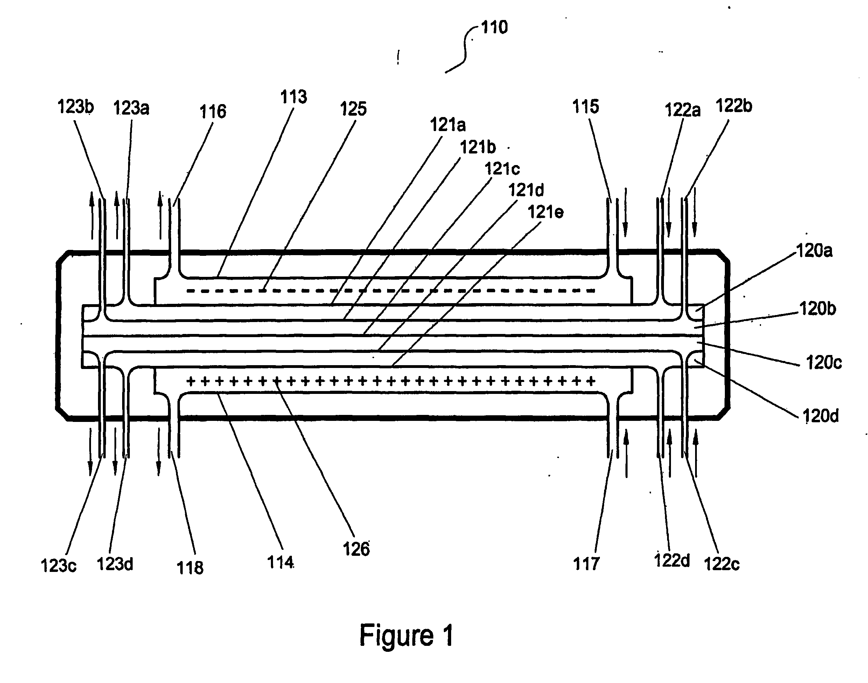

Figure 1 shows an electrophoresis separation unit having four separation chambers. The apparatus 110 comprises a cathode chamber 113 and an anode chamber 114, each chamber having inlet 115, 117 and outlet 116, 118 means for feeding electrolyte into and out of the respective electrode chambers 113, 114. Four separation chambers 120a, 120b, 120c, 120d, formed by five of ion-permeable barriers 121a, 121b, 121c, 121d, 121e are positioned between the cathode and anode chambers 113,114. Four inlet 122a, 122b, 122c, 122d and four outlet 123a, 123b, 123c, 123d means for feeding liquid into and out of the respective separation chambers 120a, 120b, 120c, 120d are positioned near each end of the unit 110.

The separation chambers 120a, 120b, 120c, 120d can be formed or housed in a cartridge which is adapted to be removable from the unit 110. Cathode and anode 125, 126 are housed in the anode and cathode chambers 113, 114 such that when an electric potential is applied between the electrodes, contents in the chambers are exposed to the electric potential.

When electrolyte is passed into and out of the electrode chambers 113, 114 via inlets 115, 117 and outlets 116,118 fluid streams are formed in the respective chambers. Similarly, when fluid is passed into and out of the separation chambers 120a, 120b, 120c, 120d via inlets 122a, 122b, 122c, 122d and outlets 123a, 123b, 123c, 123d fluid streams are formed in the respective chambers.

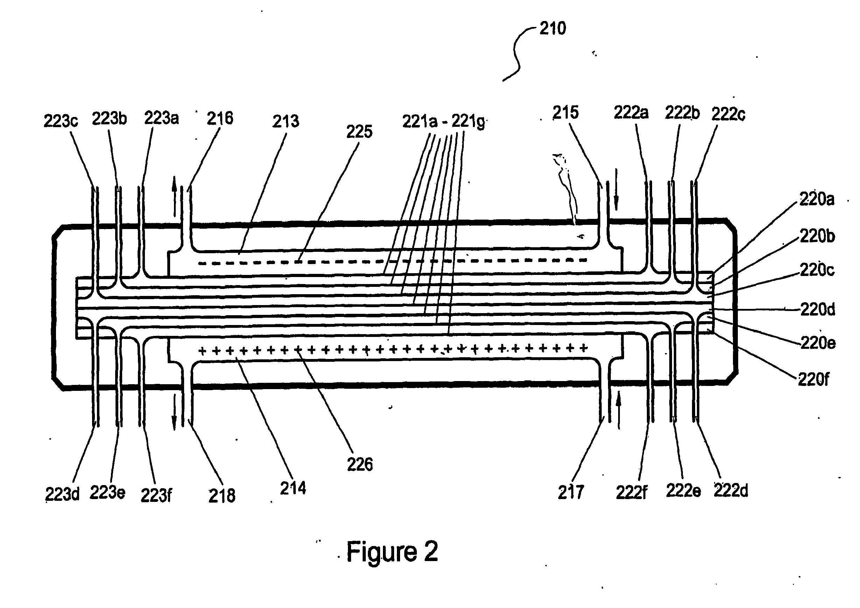

Figure 2 shows another separation unit having six separation chambers. The apparatus 210 comprises a cathode chamber 213 and an anode chamber 214, each chamber having inlet 215, 217 and outlet 216, 218 means for feeding electrolyte into and out of the respective electrode chambers 213, 214. Positioned between the electrode chambers 213, 214 are six separation chambers 220a, 220b, 220c, 220d, 220e, 220f formed by seven ion-permeable barriers 221a - 221g positioned between the cathode and anode chambers 213, 214 forming the separation chambers 220a - 220f. Six inlet 222a, 222b, 222c, 222d, 222e, 222f and six outlet 223a, 223b, 223c, 223d, 223e, 223f means for feeding liquid into and out of the respective separation chambers 220a-220f are positioned near each end of the unit 210.

The separation chambers 220a - 220f can be formed or housed in a cartridge which is adapted to be removable from the unit 210. Cathode and anode 225, 226 are housed in the anode and cathode chambers 213, 214 such that when an electric potential is applied between the electrodes 225, 226 contents in the separation chambers 220a - 220f are exposed to the potential.

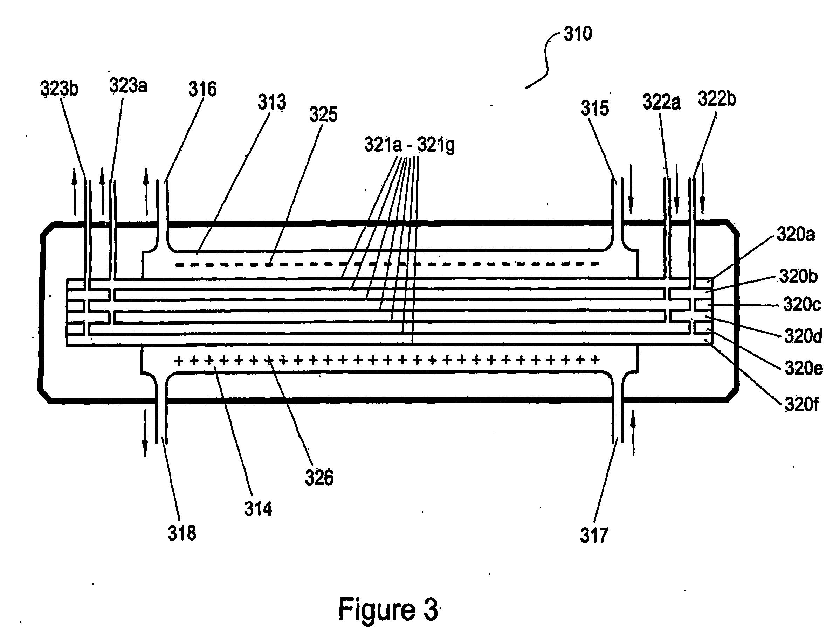

The apparatus depicted in Figure 2 has the inlet and outlet means of each separation chamber 220a-220f separated fluidly from each other. In contrast, Figure 3 depicts an apparatus 310 with six separation chambers 320a, 320b, 320c, 320d, 320e, 320f of which three chambers 320a, 320c, 320e are in fluid connection by common inlet 322a and common outlet 323a means. The other three separation chambers 320b, 320d, 320f are in fluid connection by common inlet 322b and common outlet 323b means. When fluid is passed into inlet means 322a and out of outlet means 323a, fluid passes through separation chambers 320a, 320c, 320e forming a separation stream in the chambers. Similarly, when fluid is passed into inlet means 322b and out of outlet means 323b, fluid passes through separation chambers 320b, 320c, 320f forming a separation stream in those chambers.

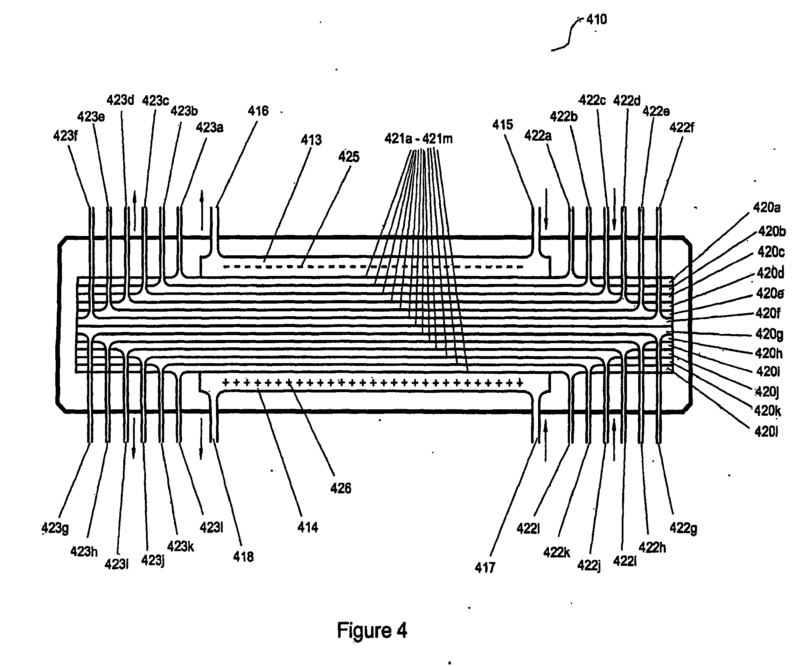

Figure 4 shows apparatus according to the present invention having twelve separation chambers. The apparatus 410, comprises a cathode chamber 413 and an anode chamber 414, each chamber having inlet 415, 417 and outlet 416, 418 means for feeding electrolyte into and out of the electrode chambers 413, 414. Twelve separation chambers 420a, 4201 are positioned between the cathode and anode chambers 413, 414. The separation chambers 420a - 4201 are formed by thirteen ion-permeable membranes 421a - 421m positioned between the cathode and anode chambers 413, 414. Twelve inlet 422a - 4221 and twelve outlet 423a-4231 means are positioned relative to each end of the unit 410 for feeding liquid into and out of the respective twelve separation chambers 420a-4201.

The separation chambers 420a-4201 can be formed or housed in a cartridge which is adapted to be removable from the apparatus 410. Cathode and anode 425, 426 are housed in the anode and cathode chambers 413, 414.

The apparatus depicted in Figure 4 has each separation chamber 420a-4201 separated fluidly from each other. It will be appreciated, however, that one or more chambers can share the same inlet and outlet means so that the same material may be passed through more than one separation chamber if required.

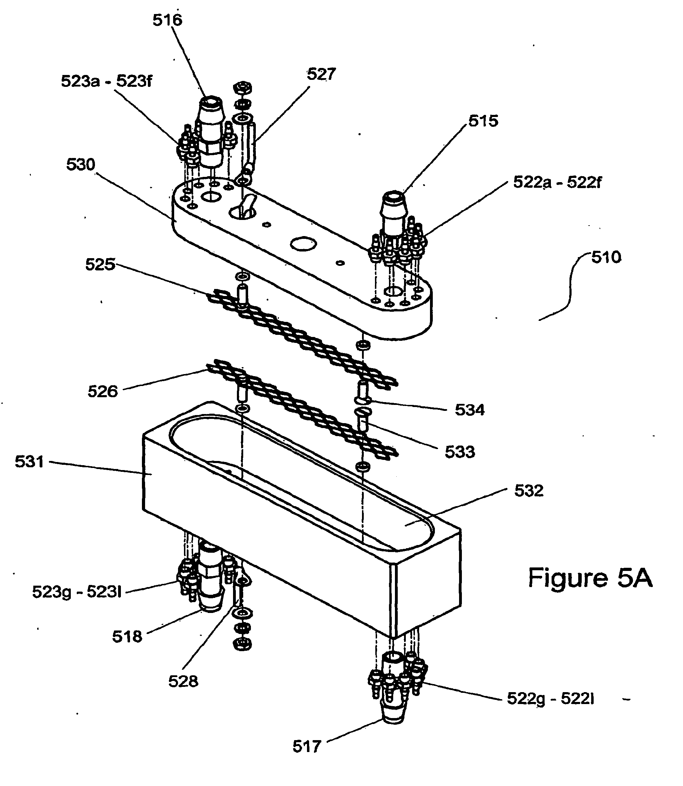

Figure 5A shows an exploded view of a separation unit adapted to house thirteen ion-permeable barriers forming twelve separation chambers. The unit 510 includes a cathodic connection block 530 which defines six inlet 522a - 522f and outlet 523a - 523f means for feeding liquid into and out of six upper separation chambers and housing cathode 525. An anodic connection block 531 defines six lower inlet 522g - 5221 and outlet 523g - 5231 means for feeding liquid into and out of six lower separation chambers and housing anode 526 in the anodic connection block 531. The unit 510 has catholyte inlet 515 and outlet 516 means in the cathodic connection block 530 to pass electrolyte through the block 530 which houses a cathode. Similarly, the anodic block 531 has anolyte inlet 517 and outlet 518 means for passing electrolyte through the anodic block which houses an anode.

The cathodic and anodic connection blocks 530, 531 house electrodes 525, 526 and connection means 527, 528 for connecting the electrodes to a power supply. The electrodes 525, 526 are usually made of titanium mesh coated with platinum, but other inert electrically-conducting materials would also be suitable. The anode 526 is attached to the anode block 531 by suitable attaching means such as screws 533. Similarly, the cathode is attached to the cathode block by suitable attaching means such as screws 534.

The anode connection block 531 contains recess 532 for receiving ion-permeable membranes and cathode housing block 530. Barriers are layered into the recess 532 forming a cathode chamber and the required number of sample chambers. When the cathode block is placed in the recess containing the barriers, the cathode chamber is also formed.

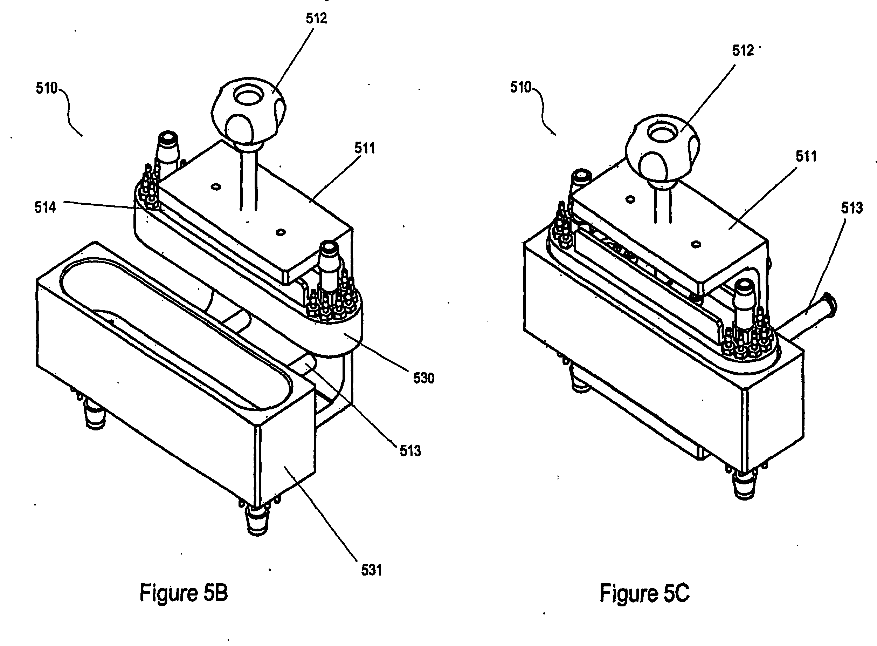

Figure 5B shows the separation unit 510 partially assembled in a U-shaped housing 511. The cathode block 530 is placed in housing 511 and a threaded bolt 512 passes through the housing and threaded into a plate 514 positioned on the top of the cathode block 530. Attachment means 513 is provided for the anode block 531 to ensure the unit 510 is correctly positioned in the housing 511.

Figure 5C shows the separation unit 510 fully assembled in the housing 511. The threaded bolt 512 is tightened forcing the cathode block into the anode block sandwiching the barriers.

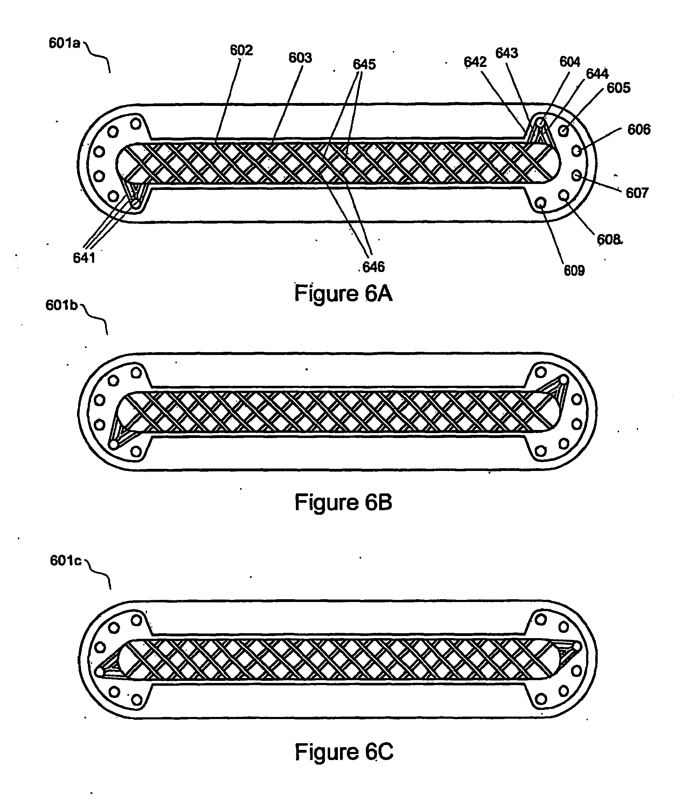

Figures 6A, 6B and 6C show preferred grid elements 601a, 601b, 601c respectively which, when assembled in the separation unit or a cartridge adapted to be placed in a separation unit, assist in supporting the ion-permeable barriers which form the electrode and separation chambers.

Figure 6A shows a plan view of a preferred grid element 601a which is incorporated as a component of separation unit 10. An elongate rectangular cut-out portion 602 which incorporates lattice 603 is defined in the center of the grid element 601a. At each end of the grid element 601a, there is positioned six ports 604, 605, 606, 607, 608, 609 suitably provided for alignment with other components of separation unit 10. Preferably, at one port at each end there is a triangular channel area 641 having sides and a base, which extends and diverges from the associated port 604 to cut-out portion 602. Upstanding ribs 642, 643 and 644 are defined in channel area 641. Liquid flowing through port 604 thus passes along triangular channel area 641 between ribs 642, 643 and 644 and into lattice 603. Ribs 642,643 and 644 direct the flow of liquid from port 604 so that they help ensure that liquid is evenly distributed along the cross-section of lattice 603. Ribs 642, 643 and 644 also provide support to an ion-permeable barrier disposed above or below the grid element.

Lattice 603 comprises a first array of spaced parallel members 645 extending at an angle to the longitudinal axis of the grid disposed above and integrally formed with a second lower set of spaced parallel members 646 extending at approximately twice the angle of the first array of parallel members 645 to the longitudinal axis of the grid. In the presently preferred embodiment, the first array of parallel members 645 extend at approximately a 45 degree angle from the longitudinal axis and the second array of parallel members 646 extend at approximately 90 degrees to the first array of parallel members 645, however, other angles are also suitably used.

The other ports, 605, 606, 607, 608, 609 do not have the rib configuration as in port 604 in grid 601a but are positioned to also allow flow of fluid to a separation chamber 20 other than the chamber that port 604 is in fluid communication. A second grid 601 b is shown in Figure 6B where the equivalent port 605 of grid 601 a contains the rib arrangement 642, 643 and 644 for assisting the flow of fluid into the chamber that is in fluid communication with grid 601 b. Similarly, Figure 6C shows a third grid 601c where the equivalent port 606 of grid 601 a contains the rib arrangement 642, 643 and 644 for assisting the flow of fluid into the chamber that is in fluid communication with grid 601c. Depending on the number of grids and ion-permeable barriers used and the orientation of the grids assembled in a unit, a plurality of separation chambers can be formed which can be isolated fluidly from each other or may be in fluid communication with two or more separation chambers.

The thickness of the grid element is preferably relatively small. In one presently preferred embodiment, exterior areas of the grid element are 0.8 mm thick. A sealing rib or ridge can extend around the periphery of lattice 603 to improve sealing on the reverse side of the grid element. The ridge is preferably approximately 1.2 mm thick measured from one side of the grid element to the other. The distance between the opposite peaks of lattice elements 645 and 646 measured from one side of the grid to the other is preferably approximately 1 mm. The relatively small thickness of the grid provides several advantages. First, it results in a more even distribution of liquid over ion-permeable barrier 21 and assists in inhibiting its fouling by macromolecules or other viscous compounds.

Also, the volume of liquid required is decreased by the use of a relatively thin grid which enables relatively small sample volumes to be used for laboratory-scale separations, a significant advantage over prior art separation devices.

Finally, if the electric field strength is maintained constant, the use of a relatively thinner grid element enables less electrical power to be deposited into the liquid. If less heat is transferred into the liquid, the temperature of the liquid remains lower. This is advantageous since high temperatures may destroy both the sample and the desired product.

The separation unit can house a cartridge or cassette and includes an anodic connection block and a cathodic connection block between which, in use, the cartridge is clamped.

The cartridge comprises a cartridge housing which holds the components of the cartridge such as grid elements 601 and ion-permeable barriers 21. The cartridge is generally elongate and includes two parallel elongate side walls which extend along the longitudinal axis A-A of the cartridge. Each end of the cartridge includes end walls so that the cartridge is generally oval in plan view. A small flange extends around the base of the walls. The flange projects inwards towards the centre of the cartridge. Optionally, planar silicon rubber gaskets whose exterior is generally oval are configured to fit inside the walls of the cartridge resting on the flange to assist in sealing the components. If used, the centre of the gasket defines an elongate cut out portion. Adjacent to either end of the seal there are a number of holes, depending on the number of separation chambers provided in the cartridge.

Above the gasket is located an ion-permeable barrier whose external shape is generally the same as that of the interior of the cartridge, so that it too fits inside the cartridge. Each barrier has several holes adjacent to either end of the membrane and positioned so that when the cartridge is assembled, those holes align with the holes of the gasket.

Above the first barrier there is a grid element. Above that grid element is a second barrier. More grid elements are stacked with corresponding barriers positioned in between to provide the number of separation chambers required.

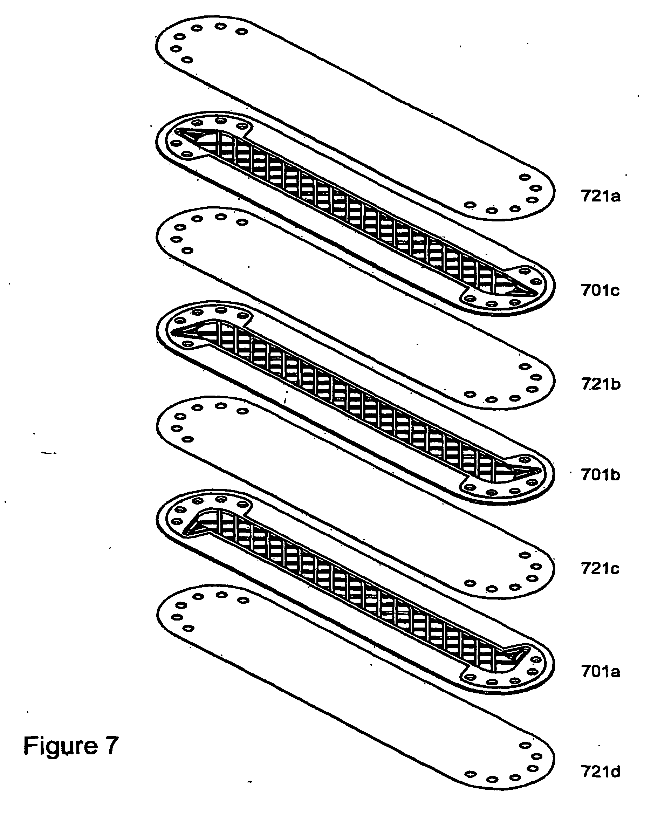

Examples of stacking arrangement of grid elements and ion-permeable barriers are shown in Figures 7 to 10. Figure 7 shows exploded view of an arrangement forming three separation chambers. The unit contains four barriers 721a - 721d and three grid elements 701 c, 701 b, 701a. Barrier 721 a is positioned at the cathode side of the separation unit and is supported by grid element 701 c. A first separation chamber is formed between barrier 721 a and element 701 c. A second barrier 721 b is positioned between grid elements 701 c and 701 b such that a second sample chamber is formed between barrier 721 b and grid element 701b. Third barrier 721c is positioned between the grid elements 701b and 701a forming a third sample chamber between the third barrier 721 c and grid element 701 a. Fourth barrier 721 d is positioned at the anode side of the separation unit.

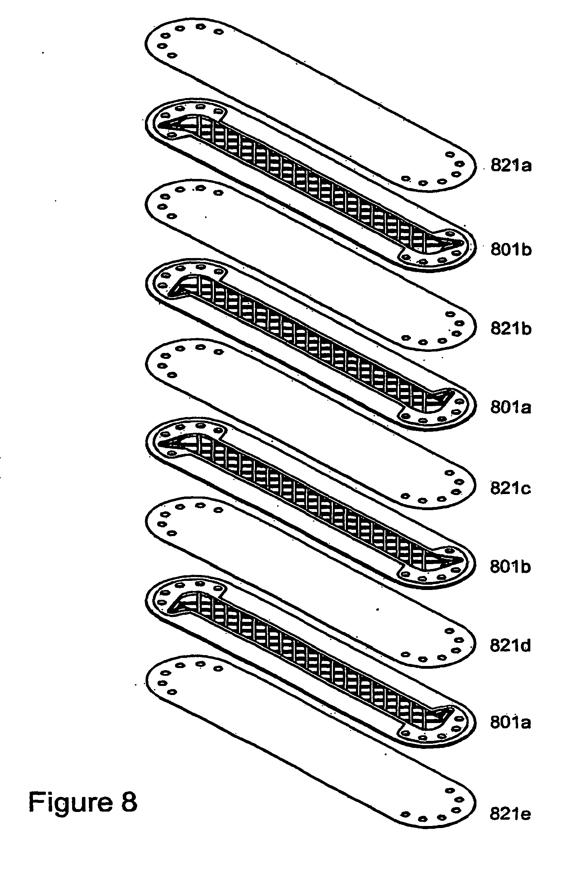

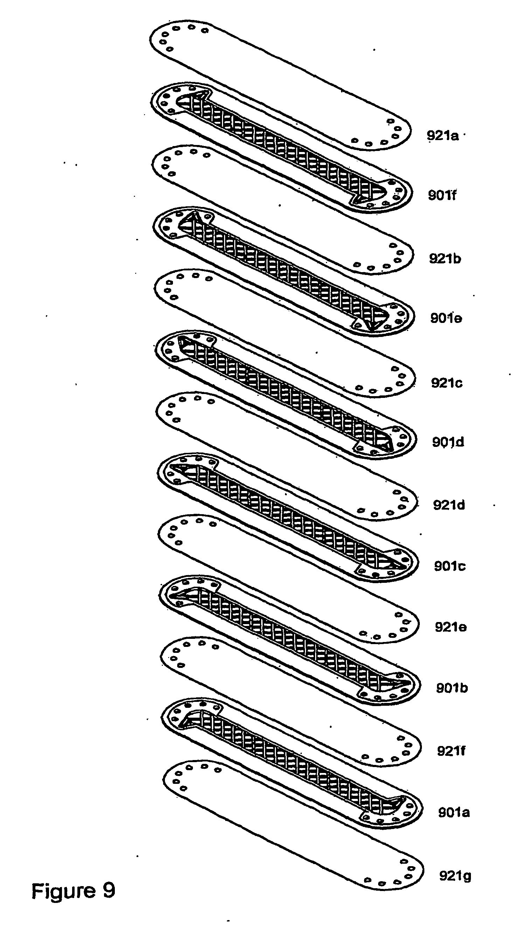

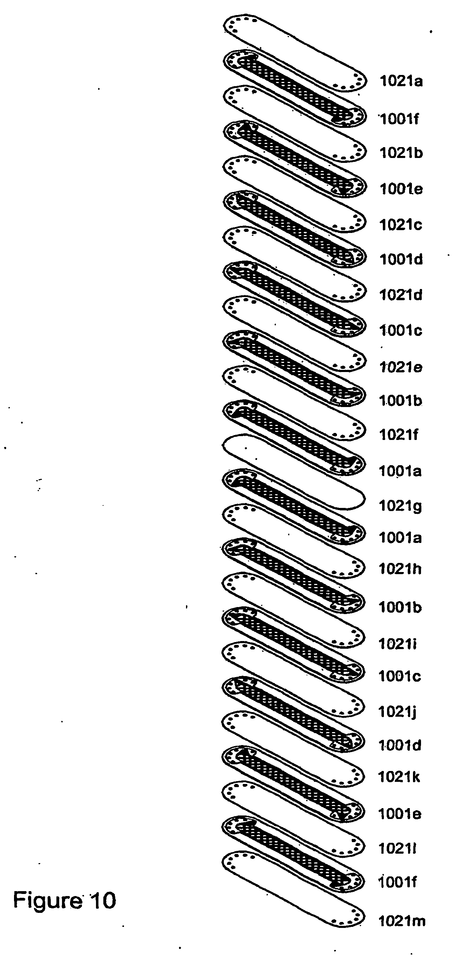

In a similar arrangement, Figure 8 shows an exploded view of an arrangement of barriers and grid elements forming four separation chambers. The unit contains five barriers 821a - 821e and four grid elements 801c, 801b, 801a. Figure 9 shows an exploded view of an arrangement of barriers and grid elements forming six separation chambers. The unit contains seven barriers 921a - 921 g and six grid elements 901a, 901b, 901, 901d, 901 e, 901f. Figure 10 shows an exploded view of an arrangement of barriers and grid elements forming twelve separation chambers. The unit contains thirteen barriers 1021a -1021m and twelve grid elements 1001a, 1001b, 1001c, 1001d, 1001e, 1001f. It will be appreciated from the examples provided that the modular approach of the present invention using barriers and grid elements allows the preparation of many different arrangements.

One function of the grid element is to keep the barriers apart. The grid element also has to provide a path for the sample or electrolyte flow in each separation chamber since the grid elements for each chamber are similar. The grid element is generally planar and the exterior of the grid element is shaped to fit inside the walls of the cartridge housing.

The ion-permeable barrier is selected depending on the application. Following each separation barrier there are preferably further elements:- there is a further grid element, a ion-permeable barrier, and a further gasket symmetrically arranged about the barrier. Those stacked components form the separation chamber and a part of the boundary of the electrode chamber stream. The components are held in the cartridge by means of a clip or screw or some other suitable fastener.

The main function of the cartridge is to hold the components together for insertion into the separation unit. The actual cartridge walls may have no effect on the sealing of the apparatus. If the apparatus is correctly sealed, no liquid should contact the walls of the cartridge in use.

The cathode and anode can be formed from platinum coated titanium expanded mesh, in contrast with the standard electrodes usually used for electrolytic cells which comprise platinum wire. The platinum coated titanium expanded mesh used in the apparatus of the present invention has several advantages over platinum wire. In particular, the ridged structure is self supporting and less expensive than platinum wire. The mesh also provides a greater surface area and allows lower current densities on the electrode surfaces. Also, the larger surface area distributed over the electrolyte channel provides a more even electrical field for the separation process.

The electrodes are also located close to the adjacent ion-permeable barriers. Therefore, less of the applied potential drops across the layers of the anolyte and the catholyte, and less heating of the liquid occurs. Connectors from the electrodes pass to sockets for connection of electrical power to the electrodes. The electrodes are shrouded to prevent accidental contact with an operator's fingers or the like.

In use, the cartridge is loaded into the unit, or alternatively the barriers and grid elements assembled in the unit, jaws forming a locking arrangement are closed to seal the components in place, the electrolyte solutions and samples are fed through the connection blocks via the appropriate inlet and outlet means. The unit is connected to an electrophoresis apparatus which includes pumps, plumbing and cooling provisions, if required. Connection is also made to a power supply in order to provide the electric potential for a given separation. The electric potential is set to the desired value and separation carried out as required. After the separation has been carried out, the cartridge may be reused, removed or replaced with a fresh cartridge. Alternatively, the barriers and grid elements can be reused or disassembled from the unit. Tubing connecting the inlet and outlet means may be cleaned and the electrolyte replaced, if necessary. Following that, the unit is ready to carry out a further separation.

The electrolyte solution provides the required conductivity, may also stabilise the pH during separation and act as the cooling medium.

The design of the separation unit is easily adaptable for a multi-channel separation unit and apparatus with up to twelve chambers. More separation chambers can be accommodated increasing the complexity of the arrangement regarding plumbing and pumping fluid to the chambers. For excellent flexibility, the present inventors developed a new grid design which could be expanded to accommodate a variable number of extra separation chambers. In one form, the new design allows up to twelve separation chambers (plus, the two electrode chambers) having six similar but distinct grids having six holes in each end. Twelve sample chambers are formed by stacking two sets of six grids placed into an apparatus having up to twelve different sets of fluid connections. In one form, there are three similar but distinct grids with three holes in each end to enable three different sets of connections. The grids can be stacked to form six separation chambers. The design allows the convenient formation of up to twelve separation chambers.

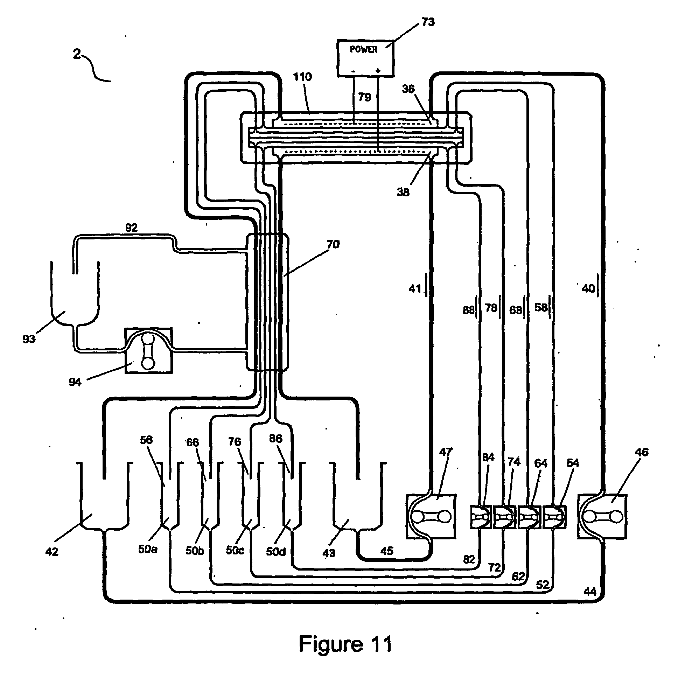

A schematic diagram of an electrophoresis apparatus 2 utilizing a separation unit 110 of Figure 1 is shown in Figure 11 for the purpose of illustrating the general functionality of an apparatus utilizing the technology of the present invention. In this purely illustrative example, six chambers (cathodic chamber 113, anodic chamber 114, and four separation chambers 120a-120d) are connected to six flow circuits. First electrolyte flow circuit 40 comprises first electrolyte reservoir 42, electrolyte tubing 44, and electrolyte pump 46. Second electrolyte flow circuit 41 comprises second electrolyte reservoir 43, electrolyte tubing 45, and electrolyte pump 47. In the configuration shown in Figure 11, electrolyte flow circuits 40 and 41 are running independently from each other so that the composition, temperature, flow rate and volume of first electrolyte 36 and second electrolyte 38 can be suitably adjusted independently of one another.

In the embodiment shown, first electrolyte 36 flows from first electrolyte reservoir 42 through tubing 44 to pump 46 to first electrolyte chamber 113. Second electrolyte 38 flows from second electrolyte reservoir 43 through tubing 45 to pump 47 to second electrolyte chamber 114. First electrolyte 36 flows through inlet 115 and second electrolyte 38 flows through inlet 117. First electrolyte 36 exits separation unit 110 through outlet 116 and second electrolyte 38 exits separation unit 110 through outlet 118. After exiting separation unit 110, electrolytes 36 and 38 flow through tubing 44 and 45 back into respective electrolyte reservoirs 42 and 43. In one embodiment, electrolytes 36 and 38 are held stagnant in electrolyte chambers 113 and 114 during separation. Electrolytes 36 and 38 can also act as a cooling medium and help prevent a build up of gases generated during electrophoresis.

First separation flow circuit 58 contains first sample reservoir 50a, tubing 52 and pump 54. First sample 56 flows from first sample reservoir 50a through tubing 52 to pump 54, then through inlet 122a into first separation chamber 120a. In one embodiment, the flow directions of first sample 56 and electrolytes 36 and 38 in first sample chamber 120a are opposite. First sample 56 exits separation unit 110 at outlet 123a and flows through tubing 52, then heat exchanger 70 before returning to first sample reservoir 50a through tubing 52. In an alternative embodiment, heat exchanger 70 passes through first electrolyte reservoir 42. In another embodiment, the flow directions of first sample 56 and electrolytes 36 and 38 in first sample chamber 120a are the same.

In addition to components of interest, first sample 56 may contain any suitable electrolyte or additive known in the art as demanded by the procedure, application, or separation being performed to substantially prevent or cause migration of selected components through the ion-permeable barriers. In a preferred embodiment, sample from which constituents are removed is placed into first sample reservoir 50a. However, it is understood that in an alternative embodiment, sample from which constituents are removed is placed into second sample reservoir 50b.

Similarly, second sample flow circuit 68 contains second sample reservoir 50b, tubing 62 and pump 64. Second sample 66 flows from second sample reservoir 50b through tubing 62 to pump 64, then through inlet 122b into second sample chamber 120b. In one embodiment, the flow directions of second sample 66 and electrolytes 36 and 38 in second sample chamber 120b are opposite. Second sample 66 exits separation unit 110 at outlet 123b and flows through tubing 62, to heat exchanger 70 before returning to second sample reservoir 50b through tubing 62. In an alternative embodiment, heat exchanger 70 passes through first electrolyte reservoir 42 or second electrolyte reservoir 43.

Second sample 66 may contain any suitable electrolyte or additive known in the art as demanded by the procedure, application, or separation being performed to substantially prevent or cause migration of selected components through the ion-permeable barriers. In a preferred embodiment, sample from which constituents are removed is placed into second sample reservoir 50b. However, it is understood that in an alternative embodiment, sample from which constituents are removed is placed into first sample reservoir 50a.

Similarly, third sample flow circuit 78 contains third sample reservoir 50c, tubing 72 and pump 74. Third sample 76 flows from third sample reservoir 50c through tubing 72 to pump 74, then through inlet 122c into third sample chamber 120c. In one embodiment, the flow directions of third sample 76 and electrolytes 36 and 38 in third sample chamber 120c are opposite. Third sample 76 exits separation unit 110 at outlet 123c and flows through tubing 72, to heat exchanger 70 before returning to third sample reservoir 50c through tubing 72. In an alternative embodiment, heat exchanger 70 passes through first electrolyte reservoir 42 or second electrolyte reservoir 43.

Third sample 76 may contain any suitable electrolyte or additive known in the art as demanded by the procedure, application, or separation being performed to substantially prevent or cause migration of selected components through the ion-permeable barriers. In a preferred embodiment, sample from which constituents are removed is placed into third sample reservoir 50c. However, it is understood that in an alternative embodiment, sample from which constituents are removed is placed into first sample reservoir 50a, or second sample reservoir 50b.

Similarly, fourth sample flow circuit 88 contains fourth sample reservoir 50d, tubing 82 and pump 84. Fourth sample 86 flows from fourth sample reservoir 50d through tubing 82 to pump 84, then through inlet 122d into fourth sample chamber 120d. In one embodiment, the flow directions of fourth sample 86 and electrolytes 36 and 38 in second sample chamber 120d are opposite. Fourth sample 86 exits separation unit 110 at outlet 123d and flows through tubing 82, to heat exchanger 70 before returning to fourth sample reservoir 50d through tubing 82. In an alternative embodiment, heat exchanger 70 passes through first electrolyte reservoir 42 or second electrolyte reservoir 43.

Fourth sample 86 may contain any suitable electrolyte or additive known in the art as demanded by the procedure, application, or separation being performed to substantially prevent or cause migration of selected components through the ion-permeable barriers. In a preferred embodiment, sample from which constituents are removed is placed into third sample reservoir 50c. However, it is understood that in an alternative embodiment, sample from which constituents are removed is placed into first sample reservoir 50a or the second sample reservoir 50b.

The heat exchanger 70 is preferably a tube-in-shell apparatus having pump 94 which passes cooled fluid via tubing 92 from reservoir 93 through the exchanger 70. As fluid is passed through the heat exchanger 70 in its respective tubing, the contents is suitably cooled to the desired temperature.

Individually adjustable flow rates of first sample 56, second sample 66, third sample 76, fourth sample 86, first electrolyte 42 and second electrolyte 43, when employed, can have a significant influence on the separation. Flow rates ranging from zero through several milliliters per minute to several liters per minute are suitable depending on the configuration of the apparatus and the composition, amount and volume of sample processed. In a laboratory scale instrument, individually adjustable flow rates ranging from about 0 mL/minute to about 50,000 mL/minute are used, with the preferred flow rates in the 0 mL/min to about 1,000 mL/minute range. However, higher flow rates are also possible, depending on the pumping means and size of the apparatus. Selection of the individually adjustable flow rates is dependent on the process, the component or components to be transferred, efficiency of transfer, and coupling of the process with other, preceding or following processes.

Furthermore, it is preferable that sample flow circuits 58, 68, 78, and 88, first electrolyte flow circuit 40 and second electrolyte flow circuit 41 are completely enclosed to prevent contamination or cross-contamination. In a preferred embodiment, reservoirs 50a - 50d, 42, and 43 are completely and individually enclosed from the rest of the apparatus.

The separation unit 110 further comprises electrodes 125 and 126. Preferably, the respective electrodes are located in the first and second electrolyte chambers 113, 114 and are separated from the first and second sample chambers by ion-permeable barriers.

Electrodes 125 and 126 are suitably standard electrodes or preferably are formed from platinum coated titanium expanded mesh, providing favorable mechanical properties, even distribution of the electric field, long service life and cost efficiency. Electrodes 125 and 126 are preferably located relatively close to ion-permeable barriers 121 a and 121e providing better utilization of the applied potential and diminished heat generation. A distance of about 0.1 to 6 mm has been found to be suitable for a laboratory scale apparatus. For scaled-up versions, the distance will depend on the number and type of ion-permeable barriers, and the size and volume of the electrolyte and sample chambers. Preferred distances would be in the order of about 0.1 mm to about 10 mm.

Separation unit 110 also preferably comprises electrode connectors 79 that are used for connecting separation unit 110 to power supply 73. Preferably, power supply 73 is external to separation unit, however, separation unit 110 is configurable to accept internal power supply 73.

Separation is achieved when an electric potential is applied to separation unit 110. Selection of the electric field strength (potential) varies depending on the separation. Typically, the electric field strength varies between 1 V/cm to about 5,000 V/cm, preferably between 10 V/cm to 2,000 V/cm. It is preferable to maintain the total power consumption in the unit at the minimum, commensurable with the desired separation and production rate.

In one embodiment, the applied electric potential is periodically stopped and reversed to cause movement of components that have entered the ion-permeable barriers back into at least one of the fluid streams, while substantially not causing re-entry of any components that have entered other fluid streams. In another embodiment, a resting period is utilized. Resting (a period during which fluid flows are maintained but no electric potential is applied) is an optional step that suitably replaces or is included after an optional reversal of the electric potential. Resting is often used for protein-containing samples as an alternative to reversing the potential.

Separation unit 110 is suitably cooled by various methods known in the art such as ice bricks or cooling coils (external apparatus) placed in one or both electrolyte reservoirs 42 and 43, or any other suitable means capable of controlling the temperature of electrolytes 36 and 38. Because both sample flow circuits 58, 68, 78 and 88 pass through heat exchanger 70, heat is exchanged between samples and one or both of first and second electrolytes. Heat exchange tends to maintain the temperature in the samples at the preferred, usually low levels.

The present invention further encompasses electrophoresis apparatus utilising separation units having at least twelve separation chambers as described above. For example, the separation units described with reference to Figures 2 to 4 can also be used with the appropriate number of flow paths, pumps, and sample chambers.

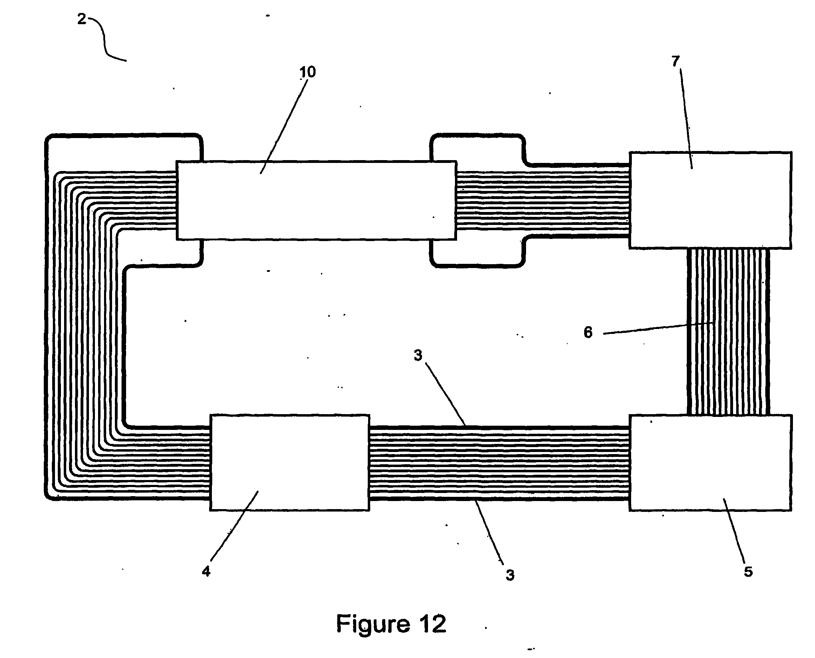

Figure 12 shows a schematic of an electrophoresis apparatus 2 having two electrolyte flow paths 3, twelve separation flow paths 6, sample and electrolyte reservoirs 5 and a cooling facility 7. Separation unit 10 houses twelve separation chambers, cathode chamber and anode chamber. Pumps 4 communicate fluid to the separation unit 10 from the sample and electrolyte chambers 5.

An advantage of the present invention is the ability to arrange for a separation apparatus having three or more separation chambers in various configurations.

In one embodiment, an ion-permeable barrier is formed from a membrane with a characteristic average pore size and pore-size distribution. The average pore size and pore size distribution of the membrane is selected to facilitate trans-membrane transport of certain constituents, while substantially preventing trans-membrane transport of other constituents.

In another embodiment, an ion-permeable barrier is an isoelectric ion-permeable membrane, such as an isoelectric membrane that substantially prevents convective mixing of the contents of adjoining chambers, while permits selective trans-barrier transport of selected constituents upon application of the electric potential. Suitable isoelectric membranes can be produced by copolymerizing acrylamide, N,N'-methylene bisacrylamide and appropriate acrylamido derivatives of weak electrolytes yielding isoelectric membranes with pI values in the 2 to 12 range, and average pore sizes that either facilitate or substantially prevent trans-membrane transport of components of selected sizes.

In another embodiment, an ion-permeable barrier is an ion-exchange ion-permeable membrane, such as anion-exchange membrane that substantially prevents convective mixing of the contents of adjoining chambers, while permits selective trans-barrier transport of selected constituents upon application of the electric potential. Suitable ion-exchange membranes are strong-electrolyte and weak-electrolyte functional-group containing porous membranes.

### EXAMPLES

### Example 1

An apparatus according to the present invention containing twelve separation chambers was used to separate immunoglobulin G (IgG) from human plasma. This example demonstrated the use of the apparatus for processing the same feed sample, from the same sample reservoir, through four sets of identical, multiple, parallel separation chambers.

The separation unit was assembled as follows. All ion-permeable barriers were polyacrylamide membranes with different nominal molecular mass cut-offs (NMM). The first set of parallel separation chambers started with 1^{st} ion-permeable barrier between the cathode compartment and the first separation chamber with an NMM of 5,000 dalton, through the next barrier between the 1^{st} and 2^{nd} separation chambers with an NMM of 100,000 dalton, then the next barrier between the 2^{nd} and 3^{rd} separation chambers with an NMM of greater than 1,000,000 dalton. The second set of parallel separation chambers started with the barrier between the 3^{rd} and 4^{th} separation chambers with an NMM of 5,000 dalton, through the next barrier between the 4^{th} and 5^{th} separation chambers with an NMM of 100,000 dalton, then the next barrier between the 5^{th} and 6^{th} separation chambers with an NMM of greater than 1,000,000 dalton. The third set of parallel separation chambers started with the barrier between the 6^{th} and 7^{th} separation chambers with an NMM of 5,000 dalton, through the next barrier between the 7^{th} and 8^{th} separation chambers with an NMM of 100,000 dalton, then the next barrier between the 8^{th} and 9^{th} separation chambers with a NMM of greater than 1,000,000 dalton. Finally, the fourth set of parallel separation chambers started with the barrier between the 9^{th} and 10^{th} separation chambers with an NMM of 5,000 dalton, through the next barrier between the 10^{th} and 11^{th} separation chambers with an NMM of 100,000 dalton, then the next barrier between the 11^{th} and 12^{th} separation chambers with an NMM of greater than 1,000,000 dalton. The 12^{th} separation chamber is separated from the anode compartment by an ion-permeable barrier with an NMM of 5,000 dalton.

The electrolyte in the anode and cathode compartments (2 L each), as well as in the 1^{st}, 2^{nd} , 4^{th}, 5^{th}, 7^{th}, 8^{th}, and 10^{th}, 11^{th} separation chambers (20 mL each) was identical: 60 mM MOPS and 40 mM GABA at pH 5.50. The feed sample was prepared by diluting human plasma at a rate of 1 to 10 with the same pH 5.50, 60 mM MOPS and 40 mM GABA buffer (final pH 6.02). One hundred and ten mL of this sample was loaded into the 3^{rd}, 6^{th}, 9^{th} and 12^{th} separation chambers.

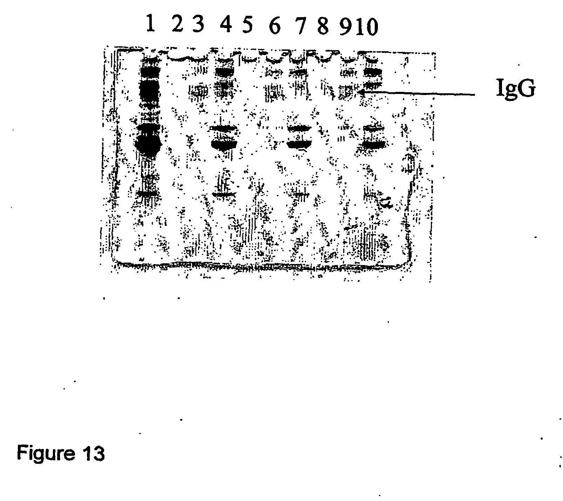

The separation was conducted at 600V for 180 min. The current was around 34 mA during the separation. At pH 5.5, IgG was cationic and moved toward the cathode, crossed the greater than 1,000,000 dalton NMM barriers, but could not cross the 100,000 dalton NMM barriers, and thus was trapped in separation chambers 2, 5, 8, and 11 as the product. The low molecular mass proteins proceeded through the NMM 100,000 barrier and were trapped in streams 1, 4, nd 10 (contaminant stream). Transfer of IgG from the sample stream to the product stream was evident at the first analysis point at 60 mins (Figure 13). The pH changes observed over the course of the separation are listed in Table 1.

**Table 1. pH changes during purification IgG from human plasma using a multiple membrane stack and a single sample source.**

| **Component** | **Initial pH** | **Final pH** |
|---|---|---|
| Catholyte | 5.5 | 5.78 |
| Contaminant stream | 5.5 | 5.47 |
| Product stream | 5.5 | 5.49 |
| Fee stream | 6.02 | 5.48 |
| Anolyte | 5.5 | 5.39 |

### Example 2

An apparatus containing twelve separation chambers was used to separate IgG from human plasma. This example demonstrated the use of the apparatus for processing the same feed sample, from the same sample reservoir, through six sets of identical, multiple, parallel separation chambers using the principles of a pH-dependent charge-based separation.

The separation unit was assembled as follows. All ion-permeable barriers were polyacrylamide membranes with different nominal molecular mass cut-offs (NMM). The first set of parallel separation chambers started with the 1^{st} ion-permeable barrier between the cathode compartment and the first separation chamber with an NMM of 5,000 dalton, through the next barrier between the 1^{st} and 2^{nd} separation chambers with an NMM of greater than 1,000,000 dalton. The second set of parallel separation chambers started with the barrier between the 2^{nd} and 3^{rd} separation chambers with an NMM of 5,000 dalton, through the next barrier between the 3^{rd} and 4^{th} separation chambers with an NMM of greater than 1,000,000 dalton. The third set of parallel separation chambers started with the barrier between the 4^{th} and 5^{th} separation chambers with an NMM of 5,000 dalton, through the next barrier between the 5^{th} and 6^{th} separation chambers with an NMM of greater than 1,000,000 dalton. The fourth

set of parallel separation chambers started with the barrier between the 6^{th} and 7^{th} separation chambers with an NMM of 5,000 dalton, through the next barrier between the 7^{th} and 8^{th} separation chambers with an NMM of greater than 1,000,000 dalton. The fifth set of parallel separation chambers started with the barrier between the 8^{th} and 9^{th} separation chambers with an NMM of 5,000 dalton, through the next barrier between the 9^{th} and 10^{th} separation chambers with an NMM of greater than 1,000,000 dalton. The last, sixth set of parallel separation chambers starts with the barrier between the 10^{th} and 11^{th} separation chambers with an NMM of 5,000 dalton, through the next barrier between the 11^{th} and 12^{th} separation chambers with an NMM of greater than 1,000,000 dalton. Finally, the 12^{th} separation chamber was separated from the anode compartment by an ion-permeable barrier with an NMM of 5,000 dalton.

The electrolyte in the anode and cathode compartments (2 L each), as well as in the 1^{st}, 3^{rd} 5^{th}, 7^{th}, 9^{th}, and 11^{th} separation compartments (15 mL each) was identical: 60 mM MOPS and 40 mM GABA at pH 5.46. The feed sample was prepared by diluting human plasma at a rate of 1 to 10 with the pH 5.46 60 mM MOPS and 40 mM GABA buffer (final pH 6.0). Fifteen mL of this sample was loaded into each of the 2^{nd} , 4^{th}, 6^{th}, 8^{th}, 10^{th}, and 12^{th} separation chambers.

The separation was conducted for 180 mins at 600 V. The current was around 30 mA during the separation. At pH 5.46, IgG was cationic and moved toward the cathode, crossing the greater than 1,000,000 dalton NMM barriers.

The higher pI proteins were anionic and remained where they were fed: in chambers 2^{nd}, 4^{th}, 6^{th}, 8^{th}, 10^{th}, and 12^{th}, because even though they were anionic, they could not cross the NMM 5,000 barriers. At the end of the separation, each product and sample stream was collected, and 10 mL of phosphate-buffered saline (PBS) solution was added to each stream and circulated for 10 min without applying the separation potential. The PBS solution was then collected from each stream.

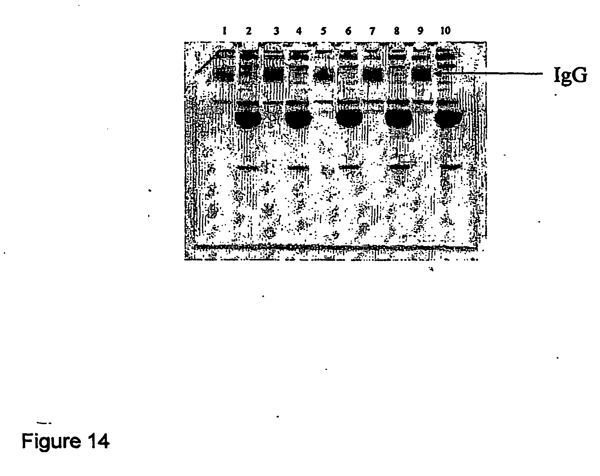

The transfer of IgG into the product streams was mostly complete at 60 mins (Figure 14). At the end of the separation, the pH of all sample streams ranged from 5.49 to 5.55, the catholyte was pH 5.76 and the anolyte was pH 5.45.

### Example 3

An apparatus according to the present invention containing twelve separation chambers was used to separate the components of chicken egg white according to their size. This example demonstrated the use of the apparatus for achieving size-based separations through the use of a series of ion-permeable barriers whose nominal molecular mass cut-off is different.

The separation unit was assembled as follows. All ion-permeable barriers were polyacrylamide membranes with different nominal molecular mass cut-offs (NMM). The ion-permeable barrier between the anode compartment and the 1^{st} separation chamber was a polyacrylamide membrane with an NMM of 3,000 dalton. The barrier between the 1^{st} and 2^{nd} separation chambers had an NMM of 5,000 dalton, the barrier between the 2^{nd} and 3^{rd} separation chambers had an NMM of 50,000 dalton, the barrier between the 3^{rd} and 4^{th} separation chambers had an NMM of 100,000 dalton, the next barrier between the 4^{th} and 5^{th} separation chambers had an NMM of 150,000 dalton, the next barrier between the 5th and 6^{th} separation chambers had an NMM of 200,000 dalton. The barrier between the 6^{th} and 7^{th} separation chambers had an NMM of 300,000 dalton, the next barrier between the 7^{th} and 8^{th} separation chambers had an NMM of 400,000 dalton. The 8^{th} and 9^{th} chambers were separated by an NMM 500,000 dalton barrier. The 9^{th} and 10^{th} separation chambers and the 10^{th} and 11^{th} separation chambers were separated by 1,000,000 dalton NMM membranes. The barrier between the 11^{th} and 12^{th} separation chambers had an NMM of 15,000 dalton. The 12^{th} separation chamber was separated from the cathode compartment by an ion-permeable barrier with an NMM of 3,000 dalton.

The electrolyte in the anode and cathode compartments (2 L each), as well as in the 1^{st}, 2^{nd}, 3^{rd}, 4^{th}, 5^{th}, 6^{th}, 7^{th}, 8^{th}, 9^{th}, 11^{th} and 12^{th} separation compartments (20 mL each) was identical: 90 mM Tris, 90 mM borate, 1 mM EDTA at pH 8.51 (TBE). The feed sample was prepared by diluting 15 mL egg white, at a rate of 1 to 4, with the electrolyte used in all the chambers and filtered through polyethylene terephthalate paper. Forty mL of this sample solution was loaded into the sample reservoir connected to separation chamber 10. The separation was conducted at 600 V for 4 hours.

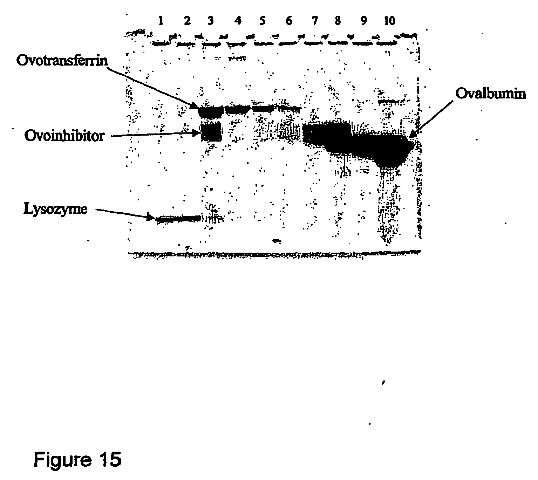

Figure 15 shows the image of an SDS-PAGE separation of the contents of the separation chambers after 4 hours of electrolysis. Lysozyme from egg white (molecular mass 14 kDa, isoelectric point of 10) moved into separation chambers 11 and 12 (between the 3 kDa-15 kDa and 15 kDa-1000 kDa membranes), because this protein is positively charged at pH 8.5 (Lanes 1 and 2). Negatively charged proteins moved toward the anode (Lanes 3-10): the smaller the size of the protein, the farther away it moved from chamber 10 which was the feed point for the sample.

### Example 4

An apparatus containing twelve separation channels was used to separate α-1-antitrypsin (AAT, 51 kDa, pI = 4.8) from human serum albumin (HSA, 66.5 kDa, pI = 4.9). This example demonstrated the use of the invented apparatus with Bier's buffers to carry out quasi-isoelectric focusing separation of components with close pI values in a shallow pH gradient generated from a binary mixture of weak electrolytes.

The separation unit was assembled as follows. All ion-permeable barriers were polyacrylamide membranes with two different nominal molecular mass cutoffs (NMM). The ion-permeable barriers between the anode chamber and the 1st separation chamber, as well as between the 12^{th} separation chamber and the cathode chamber had an NMM of 5,000 dalton. All other barriers between the 1^{st} and 2^{nd}, 2^{nd} and 3^{rd}, 3^{rd} and 4^{th}, 4^{th} and 5^{th}, 5^{th} and 6^{th} 6^{th} and 7^{th}, 7^{th} and 8^{th}, 8^{th} and 9^{th}, 9^{th} and 10^{th}, 10^{th} and 11^{th} and, finally, 11^{th} and 12^{th} separation chambers had an NMM of 1,000,000 dalton.

The anolyte (2 L) contained 10 mM glycylglycine (gly-gly) and 90 mM MES, at pH 4.01. The catholyte (2L) contained 90 mM gly-gly and 10 mM MES at pH 5.14. All separation chambers contained mixtures (15 mL each) of gly-gly and MES, at concentrations listed in Table 2 to set up the desired shallow pH gradient. The feed sample was prepared by dissolving HSA at a level of 2 mg/mL and AAT at a level of 0.5 mg/mL in 90 mM gly-gly and 10 mM MES buffer. The total sample volume was 20 mL, its initial pH was 5.35. The sample was loaded into separation chamber 12, next to the cathode. The sample was electrophoresed for 4 hours at 600 V. The current was about 40 mA during the separation.

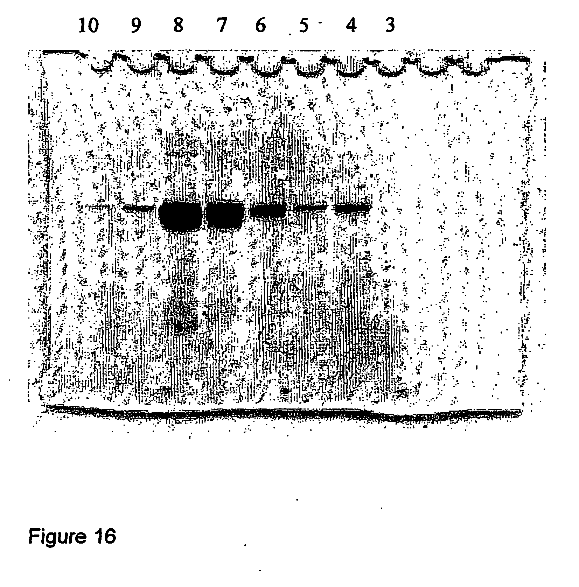

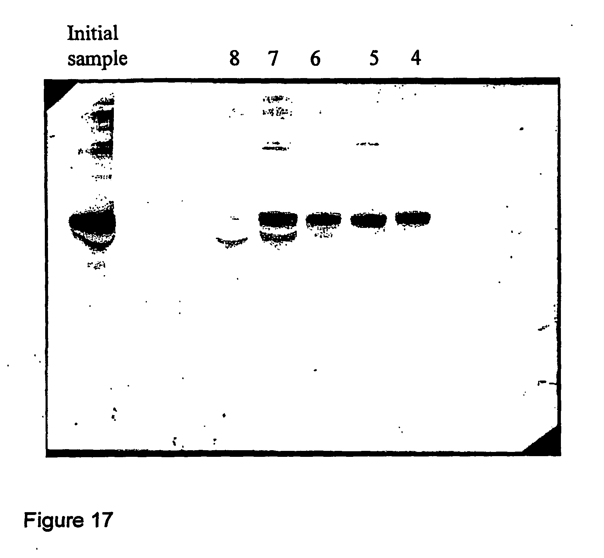

Figure 16 shows the image of an SDS-PAGE separation of the contents of the separation chambers after 4 hours of electrolysis. Figure 17 shows the image of a Western blot of the same separation with an antibody against AAT.

HSA had accumulated in separation chambers 10 to 7 (Lanes 10 to 7 in Figure 16), while AAT accumulated in separation chambers 7 to 4 (Lanes 7 to 4 in Figures 16 and 17). Pure AAT could be harvested from separation chambers 6 to 4 (Figure 17).

**Table 2. pH gradient preparation and outcomes for the separation of HSA from AAT.**

| **Stream** | **mM gly-gly** | **mM MES** | **start pH** | **final pH** | **protein** |
|---|---|---|---|---|---|
| 10 (sample) | 90 | 10 | 5.35 | 5.65 | HSA |
| 9 | 90 | 10 | 5.11 | 5.64 | HSA |
| 8 | 80 | 20 | 4.94 | 5.31 | HSA |
| 7 | 70 | 30 | 4.81 | 5.02 | HSA/AAT |
| 6 | 60 | 40 | 4.72 | 4.86 | AAT |
| 5 | 50 | 50 | 4.64 | 4.74 | AAT |
| 4 | 40 | 60 | 4.55 | 4.53 | AAT |
| 3 | 30 | 70 | 4.45 | 4.29 | - |
| 2 | 20 | 80 | 4.32 | 4.27 | - |
| 1 | 10 | 90 | 4.2 | 4.21 | - |

These examples indicate that remarkably good separation of components can be achieved using the apparatus and method according to the present invention. The high production rates are attributed to the short electrophoretic migration distances, high electric field strength and good heat dissipation characteristics of the system.

## Claims

1. A multi-port electrophoresis apparatus for separating compounds in solution comprising:
(a) a cathode chamber (413) containing a cathode;
(b) an anode chamber (414) containing an anode, wherein the anode chamber is disposed relative to the cathode chamber so that the cathode (425) and anode (426) are able to generate an electric field in an electric field area upon application of a selected electric potential between the cathode and anode;
(c) inlet (415) and outlet (416) means for communicating liquid into and out of the cathode chamber defining a catholyte flow path;
(d) inlet (417) and outlet (418) means for communicating liquid into and out of the anode chamber defining an anolyte flow path;
(e) at least one electrolyte reservoir in fluid communication with the cathode chamber and the anode chamber; and means for communicating an electrolyte between the at least one electrolyte reservoir and the cathode and anode chambers; or
two electrolyte reservoirs, the first in fluid communication with the cathode chamber and the second in fluid communication with the anode chamber; a first means for communicating an electrolyte between the first electrolyte reservoir and the cathode chamber, and a second means for communicating an electrolyte between the second electrolyte reservoir and the anode chamber;
(f) twelve adjacently disposed separation chambers (420a-4201) between the cathode and anode chambers so as to be at least partially disposed in the electric field area, the separation chambers being formed by a plurality of ion-permeable membranes (421a-421m) positioned between the anode and cathode chambers, all the ion-permeable membranes being polyacrylamide membranes with different nominal molecular mass cut-offs (NMM) and being able to impede convective mixing of contents of adjacent chambers;
(g) inlet (422a-4221) and outlet (423a-4231) means for communicating liquid into and out of the separation chambers defining separation flow paths; and
(h) at least one sample reservoir, wherein each at least one sample reservoir is in fluid communication with a separation chamber.

2. An apparatus as claimed in claim 1, wherein the cathode and anode electrodes comprise titanium mesh coated with platinum.

3. An apparatus as claimed in claim 1 or 2, wherein each separation chamber contains inlet and outlet means that are in fluid communication with that chamber.

4. An apparatus as claimed in claim 1 or 2, wherein at least two separation chambers are in fluid communication via the same inlet and outlet means.

5. An apparatus as claimed in claim 1 or 2, wherein at least one separation chamber is in fluid communication with at least one other separation chamber via an external fluid communication means.

6. An apparatus as claimed in claim 1 or 2, wherein at least two of the separation chambers are in serial fluid communication.

7. An apparatus as claimed in claim 1 or 2, wherein at least two of the separation chambers are in parallel fluid communication.

8. An apparatus as claimed in any one of claims 1 to 7, further comprising:
pumping means for circulating electrolyte from the at least one electrolyte reservoir through the cathode chamber and the anode chamber forming electrolyte streams in the respective chambers; and
pumping means for circulating fluid content from the sample reservoirs through the respective separation chambers forming separation streams in the respective separation chambers.

9. An apparatus as claimed in claim 8, wherein the pumping means for communicating the electrolyte and fluid content are separately controlled for independent movement of the respective electrolyte and fluid.

10. An apparatus as claimed in any one of claims 1 to 9, further comprising means for removing contents from and replacing contents in at least one of the sample reservoirs.

11. An apparatus as claimed in any one of claims 1 to 10, further comprising means for maintaining the temperature of the contents in at least one of the cathode chamber, the anode chamber, a sample reservoir, or a separation chamber.

12. An apparatus as claimed in claim 11, wherein the temperature of the electrolyte in the cathode and anode chambers, and/or fluid in the separation chambers, is maintained.

13. An apparatus as claimed in claim 11, wherein the means to maintain the temperature is a tube-in-shell heat exchanger.

14. A method for altering the composition of a sample by electrophoresis, comprising the steps of:
(a) providing a sample to a multi-port electrophoresis apparatus according to any one of claims 1 to 13;
(b) communicating electrolyte to the anode and cathode chambers via the anode and cathode inlet means;
(c) communicating the sample to at least one of the separation chambers via the inlet means;
(d) communicating fluid to the other chambers via the inlet means; and
(e) applying an electric potential between the cathode and anode causing at least one component from the sample in a chamber to move through a membrane into one or more adjacent separation chambers.

15. A method as claimed in claim 14, further including the step of:
(f) collecting the sample with an altered composition.

16. A method as claimed in claim 14 or 15, wherein the electrolyte communicated to the anode and cathode chambers is circulated through the respective inlet means and outlet means forming electrolyte streams; and the sample and fluid communicated to the separation chambers is circulated through the inlet means and outlet means of the respective chambers forming sample and fluid streams.

17. A method as claimed in any one of claims 14 to 16, wherein substantially all trans-membrane movement of components is initiated upon the application of the electric potential.

## Patentansprüche

1. Elektrophorese-Apparatur mit mehreren Anschlüssen zum Trennen von Verbindungen in Lösung, umfassend:
(a) eine Kathodenkammer (413), enthaltend eine Kathode;
(b) eine Anodenkammer (414), enthaltend eine Anode, wobei die Anodenkammer in Bezug auf die Kathodenkammer so angeordnet ist, dass die Kathode (425) und die Anode (426) fähig sind, in einem elektrischen Feldbereich ein elektrisches Feld beim Anlegen eines gewählten elektrischen Potentials zwischen der Kathode und der Anode zu erzeugen;
(c) ein Einlass- (415) und Auslass-Mittel (416) zum Kommunizieren von Flüssigkeit in und aus der Kathodenkammer, einen Flusspfad für den Katholyten definierend;
(d) ein Einlass- (417) und Auslass-Mittel (418) zum Kommunizieren von Flüssigkeit in und aus der Anodenkammer, einen Flusspfad für den Anolyten definierend;
(e) mindestens ein Elektrolytreservoir in Flüssigkeitskommunikation mit der Kathodenkammer und der Anodenkammer; ein Mittel zum Kommunizieren eines Elektrolyten zwischen dem mindestens einem Elektrolytreservoir und den Kathoden- und Anodenkammern; oder
zwei Elektrolytreservoirs, wobei das erste in Flüssigkeitskommunikation mit der Kathodenkammer steht und das zweite in Flüssigkeitskommunikation mit der Anodenkammer steht; ein erstes Mittel zum Kommunizieren eines Elektrolyten zwischen dem ersten Elektrolytreservoir und der Kathodenkammer, und ein zweites Mittel zum Kommunizieren eines Elektrolyten zwischen dem zweiten Elektrolytreservoir und der Anodenkammer;
(f) zwölf benachbart angeordnete Trennkammern (420a-4201) zwischen den Kathoden- und Anodenkammern, so dass sie zumindest teilweise in dem elektrischen Feldbereich angeordnet sind, wobei die Trennkammern durch eine Vielzahl von ionenpermeablen Membranen (421a-421m) gebildet werden, die zwischen den Anoden- und Kathodenkammern angeordnet sind, wobei alle die ionenpermeablen Membranen Polyacrylamid-Membranen mit verschiedenen nominalen Massenobergrenzen (NMM) sind und fähig sind, das konvektive Mischen der Inhaltsstoffe benachbarter Kammern zu behindern;
(g) Einlass- (422a-4221) und Auslass-Mittel (423a-4231) zum Kommunizieren von Flüssigkeit in und aus den Trennkammern, wodurch ein Flusspfad definiert wird; und
(h) mindestens ein Probenreservoir, wobei jeweils mindestens ein Probenreservoir in Flüssigkeitskommunikation mit einer Trennkammer steht.

2. Apparatur gemäß Anspruch 1, wobei die Kathoden- und Anodenelektroden ein mit Platin beschichtetes Titangewebe umfassen.

3. Apparatur gemäß Anspruch 1 oder 2, wobei die Trennkammer jeweils ein Einlass- und Auslass-Mittel enthält, das in Flüssigkeitskommunikation mit dieser Kammer steht.

4. Apparatur gemäß Anspruch 1 oder 2, wobei mindestens zwei Trennkammern in Flüssigkeitskommunikation über das gleiche Einlass- und Auslass-Mittel stehen.

5. Apparatur gemäß Anspruch 1 oder 2, wobei mindestens eine Trennkammer in Flüssigkeitskommunikation mit mindestens einer anderen Trennkammer über ein externes Mittel zur Flüssigkeitskommunikation steht.

6. Apparatur gemäß Anspruch 1 oder 2, wobei mindestens zwei der Trennkammern in Serie in Flüssigkeitskommunikation stehen.

7. Apparatur gemäß Anspruch 1 oder 2, wobei mindestens zwei der Trennkammern parallel in Flüssigkeitskommunikation stehen.

8. Apparatur gemäß einem der Ansprüche 1-7, weiterhin umfassend:
ein Pump-Mittel zum Zirkulieren von Elektrolyt von mindestens einem Elektrolytreservoir durch die Kathodenkammer und die Anodenkammer, wobei Elektrolytströmungen in den entsprechenden Kammern gebildet werden; und
Pump-Mittel zum Zirkulieren des Flüssigkeitsinhalts von den Proben-Reservoirs durch die entsprechenden Trennkammern, wodurch Trennströmungen in den entsprechenden Trennkammern gebildet werden.

9. Apparatur gemäß Anspruch 8, wobei die Pump-Mittel zum Kommunizieren des Elektrolyten und des Flüssigkeitsinhalts separat bezüglich der unabhängigen Bewegung der entsprechenden Elektrolyte und Flüssigkeiten kontrolliert werden.

10. Apparatur gemäß einem der Ansprüche 1-9, weiterhin Mittel zum Entfernen des Inhalts aus und Ersetzen des Inhalts in mindestens einer der Probenreservoirs umfassend.

11. Apparatur gemäß einem der Ansprüche 1-10, weiterhin Mittel zum Aufrechterhalten der Temperatur des Inhalts in mindestens einer der Kathodenkammer, Anodenkammer, einem Probenreservoir oder einer Trennkammer umfassend.

12. Apparatur gemäß Anspruch 11, wobei die Temperatur des Elektrolyten in den Kathoden- und Anodenkammern und/oder der Flüssigkeit in den Trennkammern aufrechterhalten wird.

13. Vorrichtung gemäß Anspruch 11, wobei die Mittel zum Aufrechterhalten der Temperatur ein Rohrbündel-Wärmetauscher ist.

14. Verfahren zum Verändern der Zusammensetzung einer Probe durch Elektrophorese, umfassend die Schritte:
(a) Bereitstellen einer Probe in einer Elektrophorese-Apparatur mit mehreren Anschlüssen gemäß einem der Ansprüche 1-13;
(b) Kommunizieren von Elektrolyt zu den Anoden- und Kathodenkammern über die Anoden- und Kathoden-Einlass-Mittel;
(c) Kommunizieren der Probe zu mindestens einer der Trennkammern über die Einlass-Mittel;
(d) Kommunizieren von Flüssigkeit zu den anderen Kammern über die Einlass-Mittel; und
(e) Anwenden eines elektrischen Potentials zwischen der Kathode und der Anode, was die Bewegung von mindestens einer Komponente in der Probe in einer Kammer durch eine Membran in eine oder mehrere benachbarte Trennkammern bewirkt.

15. Verfahren gemäß Anspruch 14, weiterhin den Schritt enthaltend: (f) Sammeln der Probe mit einer veränderten Zusammensetzung.

16. Verfahren gemäß Anspruch 14 oder 15, wobei der durch die Anoden- und Kathodenkammern kommunizierte Elektrolyt durch entsprechende Einlass-Mittel und Auslass-Mittel zirkuliert wird, wobei Elektrolytströme gebildet werden; und die zu den Trennkammern kommunizierte Probe und Flüssigkeit durch die Einlass-Mittel und Auslass-Mittel der entsprechenden Kammern zirkuliert werden, wobei Proben- und Flüssigkeitsströme gebildet werden.

17. Verfahren gemäß einem der Ansprüche 14-16, wobei im Wesentlichen die gesamte Bewegung der Komponenten durch eine Membran durch die Anwendung des elektrischen Potentials initiiert ist.

## Revendications

1. Appareil d'électrophorèse multi-orifices pour séparer des composés en solution comprenant :
(a) une chambre cathodique (413) contenant une cathode ;
(b) une chambre anodique (414) contenant une anode, où la chambre anodique est disposée par rapport à la chambre cathodique de telle manière que la cathode (425) et l'anode (426) sont capables de produire un champ électrique dans une zone de champ électrique lors de l'application d'un potentiel électrique choisi entre la cathode et l'anode ;
(c) des moyens d'entrée (415) et de sortie (416) pour faire communiquer un liquide dans et hors de la chambre cathodique définissant un trajet d'écoulement de catholyte ;
(d) des moyens d'entrée (417) et de sortie (418) pour faire communiquer un liquide dans et hors de la chambre anodique définissant un trajet d'écoulement d'anolyte ;
(e) au moins un réservoir d'électrolyte en communication par fluide avec la chambre cathodique et la chambre anodique ; et des moyens pour faire communiquer un électrolyte entre le au moins un réservoir d'électrolyte et les chambres cathodique et anodique ; ou
deux réservoirs d'électrolyte, le premier en communication par fluide avec la chambre cathodique et le second en communication par fluide avec la chambre anodique ; un premier moyen pour faire communiquer un électrolyte entre le premier réservoir d'électrolyte et la chambre cathodique, et un second moyen pour faire communiquer un électrolyte entre le second réservoir d'électrolyte et la chambre anodique ;
(f) douze chambres de séparation (420a-4201) disposées de manière adjacente entre les chambres cathodique et anodique de manière à être au moins partiellement disposées dans la zone de champ électrique, les chambres de séparation étant formées par une pluralité de membranes perméables aux ions (421a-421m) positionnées entre les chambres anodique et cathodique, toutes les membranes perméables aux ions étant des membranes de polyacrylamide ayant des coupures de masse moléculaire nominale (MMN) différentes et étant capables d'empêcher le mélange des contenus de chambres adjacentes par convection ;
(g) des moyens d'entrée (422a-4221) et de sortie (423a-4231) pour faire communiquer un liquide dans et hors des chambres de séparation définissant des trajets d'écoulement de séparation ; et
(h) au moins un réservoir d'échantillon, où chaque au moins un réservoir d'échantillon est en communication par fluide avec une chambre de séparation.

2. Appareil selon la revendication 1 où les électrodes cathode et anode comprennent une toile de titane recouverte de platine.

3. Appareil selon la revendication 1 ou 2 où chaque chambre de séparation contient des moyens d'entrée et de sortie qui sont en communication par fluide avec cette chambre.

4. Appareil selon la revendication 1 ou 2 où au moins deux chambres de séparation sont en communication par fluide via les mêmes moyens d'entrée et de sortie.

5. Appareil selon la revendication 1 ou 2 où au moins une chambre de séparation est en communication par fluide avec au moins une autre chambre de séparation via un moyen de communication par fluide externe.

6. Appareil selon la revendication 1 ou 2 où au moins deux des chambres de séparation sont en communication par fluide en série.

7. Appareil selon la revendication 1 ou 2 où au moins deux des chambres de séparation sont en communication par fluide en parallèle.

8. Appareil selon l'une quelconque des revendications 1 à 7 comprenant en outre :
des moyens de pompage pour faire circuler un électrolyte depuis le au moins un réservoir d'électrolyte à travers la chambre cathodique et la chambre anodique formant des courants d'électrolyte dans les chambres respectives ; et
des moyens de pompage pour faire circuler le contenu de fluide des réservoirs d'échantillon à travers les chambres de séparation respectives formant des courants de séparation dans les chambres de séparation respectives.

9. Appareil selon la revendication 8 où les moyens de pompage pour faire communiquer l'électrolyte et le contenu de fluide sont commandés séparément pour un mouvement indépendant de l'électrolyte et du fluide respectifs.

10. Appareil selon l'une quelconque des revendications 1 à 9 comprenant en outre des moyens pour retirer les contenus de et remplacer les contenus dans au moins l'un des réservoirs d'échantillon.

11. Appareil selon l'une quelconque des revendications 1 à 10 comprenant en outre des moyens pour maintenir la température des contenus dans au moins l'un de la chambre cathodique, de la chambre anodique, des réservoirs d'échantillon ou d'une chambre de séparation.

12. Appareil selon la revendication 11 où la température de l'électrolyte dans les chambres cathodique et anodique, et/ou du fluide dans les chambres de séparation, est maintenue.

13. Appareil selon la revendication 11 où le moyen pour maintenir la température est un échangeur de chaleur tubulaire.

14. Procédé pour modifier la composition d'un échantillon par électrophorèse comprenant les étapes de :
(a) fournir un échantillon à un appareil d'électrophorèse multi-orifices selon l'une quelconque des revendications 1 à 13 ;
(b) faire communiquer un électrolyte avec les chambres anodique et cathodique via les moyens d'entrée anodiques et cathodiques;
(c) faire communiquer l'échantillon avec au moins l'une des chambres de séparation via les moyens d'entrée ;
(d) faire communiquer un fluide avec les autres chambres via les moyens d'entrée ; et
(e) appliquer un potentiel électrique entre la cathode et l'anode amenant au moins un composant issu de l'échantillon dans une chambre à se déplacer à travers une membrane dans une ou plusieurs chambres de séparation adjacentes.

15. Procédé selon la revendication 14 incluant en outre l'étape de :
(f) recueillir l'échantillon ayant une composition modifiée.

16. Procédé selon la revendication 14 ou 15 où l'électrolyte amené à communiquer avec les chambres anodique et cathodique est amené à circuler à travers les moyens d'entrée et les moyens de sortie respectifs formant des courants d'électrolyte ; et l'échantillon et le fluide amenés à communiquer avec les chambres de séparation sont amenés à circuler à travers les moyens d'entrée et les moyens de sortie des chambres respectives formant des courants d'échantillon et de fluide.

17. Procédé selon l'une quelconque des revendications 14 à 16 où sensiblement tout le mouvement transmembranaire de composants est initié lors de l'application du potentiel électrique.
